(19) Europäisches Patentamt
European Patent Office
Office européen des brevets

(11) **EP 4 587 949 B1**

## (12) EUROPEAN PATENT SPECIFICATION

(45) Date of publication and mention
of the grant of the patent:
**13.05.2026 Bulletin 2026/20**

(21) Application number: **24802135.4**

(22) Date of filing: **24.10.2024**

(51) International Patent Classification (IPC):
*G06F 21/60* (2013.01)    *G06F 21/62* (2013.01)
*H04L 9/06* (2006.01)     *H04L 9/40* (2022.01)
*H04W 12/02* (2009.01)    *H04L 9/14* (2006.01)

(52) Cooperative Patent Classification (CPC):
**G06F 21/602; G06F 21/6245; H04L 9/14;
H04L 63/0407; H04L 63/0428; H04W 12/02;**
H04L 2209/42

(86) International application number:
**PCT/US2024/052751**

(87) International publication number:
**WO 2025/090724 (01.05.2025 Gazette 2025/18)**

(54) **PRIVACY PRESERVING NETWORK MEASUREMENTS USING PARTIAL IDENTIFIERS AND CONSISTENT BUCKET SIZING**

DATENSCHUTZBEWAHRENDE NETZWERKMESSUNGEN MIT PARTIELLEN IDENTIFIKATOREN UND KONSISTENTER BUCKET-GRÖSSENBESTIMMUNG

MESURES DE RÉSEAU PRÉSERVANT LA CONFIDENTIALITÉ À L'AIDE D'IDENTIFIANTS PARTIELS ET D'UN DIMENSIONNEMENT DE COMPARTIMENT COHÉRENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.10.2023 US 202363545524 P**

(43) Date of publication of application:
**23.07.2025 Bulletin 2025/30**

(73) Proprietor: **Google LLC
Mountain View, CA 94043 (US)**

(72) Inventors:
• **GANDHI, Darshak Kumarpal
Mountain View, California 94043 (US)**
• **CHAUHAN, Satvik
Mountain View, California 94043 (US)**

(74) Representative: **Marks & Clerk GST
1 New York Street
Manchester M1 4HD (GB)**

(56) References cited:
**WO-A1-2022/266071    US-A1- 2022 027 497
US-A1- 2022 147 650**

**Description**

CROSS REFERENCE TO RELATED APPLICATIONS

This application claims priority to U.S. Provisional Application No. 63/545,524, filed on October 24, 2023.

TECHNICAL FIELD

This specification generally relates to privacy-preserving data processing and cryptography.

BACKGROUND

Private set membership is a cryptographic protocol that allows entities to query whether an identifier is a member of a set of identifiers in a privacy preserving way such that the computer storing the set of identifiers does not learn the results of the query and the entities do not learn the details of the set of identifiers stored by the computer.

In US 2022/027497 A1, a computer-implemented method is disclosed and comprises: based on user identity information that forms a target of a computer database search strategy, generating a first partial hash of the user identity information, the first partial hash comprising a plurality of characters, generating and transmitting a first query to a server computer, the first query comprising a subset of characters of the plurality of characters of the first partial hash.

In US 2022/147650 A1, a method is disclosed including receiving encrypted identifiers and encrypted values, performing a concealing operation on the encrypted identifiers to produce concealed encrypted identifiers, wherein the concealing operation conceals the encrypted identifiers from a first computing system and a second computing system but enables matching between the concealed encrypted identifiers, decrypting, by the second computing system, the concealed encrypted identifiers to produce concealed identifiers, and performing, by the second computing system, an aggregation operation.

In WO 2022/266071 A1, encrypted information retrieval can include generating a database that is partitioned into shards each having a shard identifier, and database entries in each shard that are partitioned into buckets having a bucket identifier. A batch of client-encrypted queries are received. The batch of client-encrypted queries are processed using a set of server-encrypted data stored in a database. The processing includes grouping the client-encrypted queries according to shard identifiers of the client-encrypted queries, executing multiple queries in the group of client-encrypted queries for the shard together in a batch execution process, and generating multiple server-encrypted results to the multiple queries in the group of client-encrypted queries.

SUMMARY

This specification describes methods, computer systems, and apparatus, including computer programs encoded on computer storage media, for using cryptographic protocols to generate network measurements in privacy preserving ways. The invention is defined in the independent claims. Preferred embodiments are defined in the dependent claims. A combination of private set membership and dynamically, or at least variably, sized partial identifiers can be used to obtain network data for generating network measurements (or other types of data) in ways that reduce the amount of data that is analyzed and sent over a network while still preserving user privacy, thereby improving the speed and efficiency in collecting the data and generating the network measurements without compromising privacy and data security.

To protect user privacy, an actual user identifier or device identifier may not be sent from a client device of the user to another system, e.g., to a network measurement system, in cleartext. Instead, the client device can send either a complete masked identifier or a partial masked identifier. The complete masked identifier can be a masked version of the complete identifier for the user or client device. For example, the complete masked identifier can be a hash value generated by applying a cryptographic hash function to the complete user identifier or the complete device identifier. The partial masked identifier can be a partial version of the complete masked identifier, identifier, e.g., with fewer characters or bits than the complete masked identifier. For example, the complete masked identifier can be 256 bits if a SHA-256 hash function is used or 512 bits if a SHA-512 hash function is used. In these examples, the partial masked identifier would be less than 256 bits if a SHA-256 hash function is used or less than 512 bits if a SHA-512 hash function is used. For example, the partial identifier and be the first N bits, where N is a positive integer. Other hash functions can also be used.

In some implementations, a client device can send the partial masked identifier to a network measurement system in response to detecting an event. The client device can also send a first encrypted identifier to the network measurement system. The first encrypted identifier can be an encrypted version of the complete masked identifier (rather than the partial masked identifier) using an encryption key of the client device. The complete masked identifier is encrypted to prevent the network measurement system from learning the complete masked identifier corresponding to the event.

The network measurement system can use the partial masked identifier to identify network data elements that have a complete masked identifier that has a portion that matches the partial masked identifier. For example, the network measurement system can store network data for events, e.g., data that describes the network events. For each event, the network measurement system can store a network data related to the event and a complete masked identifier for the user or client device corresponding to the event. For example, when an event occurs at a client device, the client device or another entity (e.g., a publisher of a web page or other resource) can send the complete masked identifier and the network data for the event to the network measurement system. The network data for an event and the complete masked identifier for the event can be stored by the network measurement system as a network data element.

For each identified network data element, the network measurement system can generate a second encrypted identifier. The second encrypted identifier for a network data element is an encrypted version of the complete masked identifier corresponding to the network data element. For example, the network measurement system can generate the second encrypted identifier by encrypting the complete masked identifier using the encryption key of the network management system. In some implementations, the second encrypted identifier can be encrypted using a private set membership protocol and the encryption key of the network measurement system.

The network measurement system can also generate a doubly encrypted identifier by encrypting the first encrypted identifier using an encryption key of the network measurement system. The doubly encrypted identifier can be generated using homomorphic encryption techniques using the encryption key of the client device and the encryption key of the network measurement system. The network measurement system can send the doubly encrypted identifier and, for each identified network data element, a partial match element to the client device. The partial match element for each identified network data element can include the network data of the identified network data element and the encrypted second identifier for the identified network data element. The network measurement system can send the partial match elements in the form of key value pairs in which the keys are the second encrypted identifiers (or a hash value computed therefrom using a cryptographic hash function), and the value for each key is the network data corresponding to the key. Each partial match element can include a key and corresponding value for an identifier network data element. In some implementations, the network data sent to the client device is encrypted, e.g., using an encryption key generated by the network measurement system and/or another encryption key.

The client device can decrypt the doubly encrypted identifier to obtain a third encrypted identifier that is just encrypted using the network measurement system's encryption key such that the client device cannot access the complete masked identifier in cleartext. Cleartext is text that is in unencrypted form, e.g., that is not computationally tagged, specially formatted, or written in code, or data, including binary files. That is, cleartext is in a form that can be viewed or used without requiring a key or other decryption device, or other decryption process.

The client device can determine whether the identifier corresponding to the third encrypted identifier is an identifier of one of the partial match elements and therefore one of the identifier network data elements stored by the network measurement system. For example, the client device can perform a private set membership matching process using the third encrypted identifier and the encrypted network data to determine whether the identifier corresponding to the third encrypted identifier is an identifier of one of the partial match elements. If there is a match, the client device can send the encrypted network data of the matching partial match element to the network measurement system and/or decrypt the encrypted network data and send the network data to the network measurement system. In some implementations, the network data sent to the client device for each identifier network data element is doubly encrypted using a private set membership encryption key generated by the network measurement system and another encryption key, e.g., a public key of the network measurement system. In this way, the client device can decrypt the network data using the private set membership encryption key but the network data remains encrypted by the public key. This prevents the client device from accessing the network data in cleartext. In some implementations, the network data is encrypted only using the private set membership key.

The network measurement system can perform this process for network events related to various different applications that run on client devices. As the number of users for each application can vary significantly, the network measurement system may send large amounts of partial match elements for some applications, while only sending a small amount of partial match elements for applications having fewer users. As the number of partial match elements sent to a client device varies based on the number of matching partial masked identifiers, the size (e.g., in number of characters or bits) of the partial masked identifiers can drive the amount of data sent to and processed by the client device for each application.

For applications having a large number of users, using partial masked identifiers having the same size as those for smaller numbers of users can result in a large number of partial match elements being sent from the network measurement system to the client devices. For example, there may be a minimum size for the partial masked identifiers for applications having a small number of users to ensure that a sufficient number of partial match elements are sent to the client devices to protect user privacy. Using this same size can result in hundreds or thousands of partial match elements being sent for applications having larger numbers of users. This can result in wasted network bandwidth and place a large computational burden on the client devices to determine whether one of the partial match elements has an identifier that matches the identifier of the user or client device.

To ensure consistent bucket sizes, where a bucket is a set of network data elements that have a complete masked identifier that has a portion that matches a partial masked identifier, the size of the partial masked identifiers (e.g., in terms or number of bits) can be adjusted, e.g., dynamically. For example, the network measurement system can increase the size of the partial masked identifiers for applications having a large number of users and reduce the size of the partial masked identifiers for applications having a smaller number of users. The network measurement system can determine the size of the partial masked identifier for an application based on various factors including, for example, the number of users of the application, an estimated number of users of the application, a number of user interactions with digital components for the application, the number of presentations of the digital components to users, and/or the number of events that trigger the client device to initiate this process to update a network data measurement for the application, e.g., the number of conversion events for the application. By maintaining consistent in bucket sizes across multiple applications, the computational burden placed on client devices and the network measurement system can be controlled while still preserving user privacy and data security. This can prevent spikes in resource demand caused by some applications rather than other applications, which could otherwise result in degraded performance of client devices and the network over which the data is transmitted.

In general, one innovative aspect of the subject matter described in this specification can be embodied in methods that include the actions of sending, by a network measurement system and to a client device, data indicating a size for a partial identifier for an application of the client device; receiving, by the network measurement system and from the client device, (i) a partial masked identifier generated by masking a complete identifier for the client device or a user of the client device and removing a portion of a resulting complete masked identifier based on the size and (ii) a first encrypted identifier generated by encrypting the complete masked identifier using an encryption key of the client device; identifying, by the network measurement system and from a set of network data elements that each include network data and a corresponding complete masked identifier, a subset of the network data elements for which the partial masked identifier matches a portion of the complete masked identifier of the network data element; sending, to the client device, a doubly encrypted identifier generated by encrypting the first encrypted identifier using a first encryption key of the network measurement system and, for each network data element in the subset of network data elements, a partial match element including (i) a second encrypted identifier generated by encrypting the complete masked identifier of the network data element using a second encryption key of the network measurement system and (ii) encrypted network data generated by encrypting the network data of the network data element; and receiving, by the network measurement system and from the client device, (i) the encrypted network data of a given partial match element for which a decrypted version of the doubly encrypted identifier matches the second encrypted identifier of the given partial match element or (ii) the network data of the given partial match element generated by the client device by decrypting the encrypted network data of the given partial match element. Other implementations of this aspect include corresponding apparatus, systems, and computer programs, configured to perform the aspects of the methods, encoded on computer storage devices.

These and other embodiments can each optionally include one or more of the following features. In some aspects, the first encryption key of the network measurement system is the same as the second encryption key of the network measurement system.

In some aspects, the first encryption key of the network measurement system is different from the second encryption key of the network measurement system.

Some aspects include determining the size for the partial identifier for the application based on a number of users of the application. Some aspects include estimating the number of users based on a number of events reported to the network measurement system for the application.

In some aspects, the network data for each network data element includes data indicating one or more digital components interacted with by a user or client device identified by the corresponding complete masked identifier of the network data element.

In some aspects, the client device sends the partial masked identifier and the first encrypted identifier in response to detecting a conversion event. The conversion event can include the download of the application to the client device.

Some aspects include updating a network data measurement for the application based on the given partial match element.

In some aspects, the second encrypted identifier includes a hash value generated by applying a cryptographic hash function to the encrypted complete masked identifier of the network data element.

In some aspects, the encrypted network data of each network data element includes doubly encrypted network data encrypted using a third encryption key of the network measurement system and another encryption key.

In general, another innovative aspect of the subject matter described in this specification can be embodied in methods that include the actions of receiving, by a client device, data indicating a size for a partial identifier for an application of the client device; generating, by the client device, (i) a partial masked identifier by masking a complete identifier for the client device or a user of the client device and removing a portion of a resulting complete masked identifier based on the size and (ii) a first encrypted identifier by encrypting the complete masked identifier using an encryption key of the client device; sending, by the client device, the partial masked identifier and the first encrypted identifier to a network measurement system; receiving, by the client device and from the network measurement system, (i) a doubly encrypted identifier generated by encrypting the first encrypted identifier using a first encryption key of the network measurement system and, for each of a plurality of network data elements stored by the network measurement system, the plurality of network data elements being a subset of network data elements for which the partial masked identifier matches a portion of a complete masked identifier of the corresponding network data element, a partial match element including (i) a second encrypted identifier generated by encrypting a complete masked identifier of the network data element using a second encryption key of the network measurement system and (ii) encrypted network data generated by encrypting the network data of the network data element; decrypting the doubly encrypted identifier using a decryption key of the client device to obtain a third encrypted identifier; identifying a given partial match element for which the second encrypted identifier matches the third encrypted identifier; and sending the encrypted network data of the given partial match element to the network measurement system. Other implementations of this aspect include corresponding apparatus, systems, and computer programs, configured to perform the aspects of the methods, encoded on computer storage devices.

These and other embodiments can each optionally include one or more of the following features. In some aspects, the first encryption key of the network measurement system is the same as the second encryption key of the network measurement system.

In some aspects, the first encryption key of the network measurement system is different from the second encryption key of the network measurement system.

In some aspects, the size of the partial identifier for the application is based on a number of users of the application.

In some aspects, the number of users is estimated based on a number of events reported to the network measurement system for the application.

In some aspects, the network data for each network data element includes data indicating one or more digital components interacted with by a user or client device identified by the corresponding complete masked identifier of the network data element.

In some aspects, the client device sends the partial masked identifier and the first encrypted identifier in response to detecting a conversion event.

In some aspects, the conversion event includes the download of the application to the client device.

In some aspects, the second encrypted identifier includes a hash value generated by applying a cryptographic hash function to the encrypted complete masked identifier of the network data element.

In some aspects, the encrypted network data of each network data element includes doubly encrypted network data encrypted using a third encryption key of the network measurement system and another encryption key.

Particular embodiments of the subject matter described in this specification can be implemented so as to realize one or more of the following advantages. By adjusting the size of the partial masked identifiers for different applications, the number of partial match elements sent for each network event can be reduced to a consistent number across different applications while still ensuring user privacy. This reduces the amount of data sent across the network and the amount of data that is stored by the client device and processed by the client device to determine whether any of the partial match elements are a match to the user of the client device. As the number of users of an application can vary over time, the size of the partial masked identifiers can be dynamically determined for each event based on the number of users or a predicted number of users of the application. This ensures that the bucket size remains consistent even in situations in which the number of users of an application varies significantly over time or becomes very popular in a short amount of time. To ensure that the dynamic adjustment to the size of the partial masked identifiers does not jeopardize user privacy, an upper and/or lower bound can be placed on the size of the partial masked identifiers, thereby restricting the size to a given size range. The upper bound can protect user privacy by ensuring that an entity does not use a very long partial masked identifier to obtain information for a particular user and the lower bound protects the system from a sudden increase of user count for an application resulting in very large buckets that are processed by the client device. As client devices typically have less computational power and memory than server computers, it is critical to limit the amount of data sent to and processed by the client devices.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example environment in which a network measurement system collects network data and determines network measurements in a privacy preserving manner.

FIG. 2 is a flow diagram of an example process for collecting network measurement data in a privacy preserving manner.

FIG. 3 is a block diagram of an example computer system.

Like reference numbers and designations in the various drawings indicate like elements.

DETAILED DESCRIPTION

In general, this specification describes systems and techniques for collecting network data and generating network measurements in privacy preserving ways. A combination of private set membership and dynamically, or at least variably, sized partial identifiers can be used to obtain network data for generating network measurements in ways that reduce that amount of network data that is analyzed and sent over a network while still preserving user privacy, thereby improving the speed and efficiency in collecting the data and generating the network measurements.

Further to the descriptions throughout this document, a user may be provided with controls (e.g., user interface elements with which a user can interact) allowing the user to make an election as to both if and when systems, programs, or features described herein may enable the collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no apparently personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

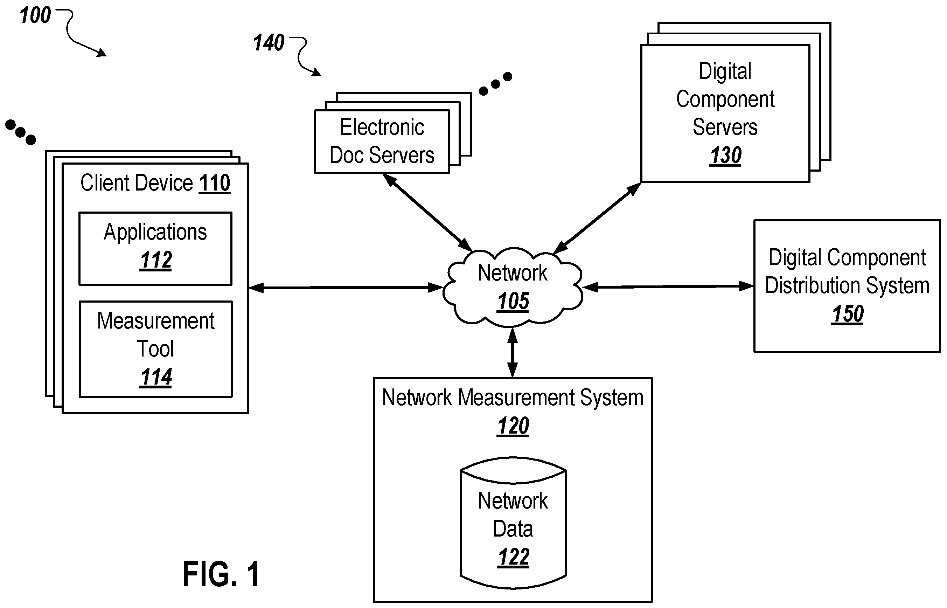

FIG. 1 is a block diagram of an example environment 100 in which a network measurement system 120 collects network data and determines network measurements in a privacy preserving manner. The environment 100 includes a data communication network 105, such as a local area network (LAN), a wide area network (WAN), the Internet, a mobile network, or a combination thereof. The data communication network 105 connects client devices 110 and the network measurement system 120 with a digital component distribution system 150.

A client device 110 is an electronic device capable of requesting and receiving online resources over the network 105. Example client devices 110 include personal computers, gaming devices, mobile communication devices, digital assistant devices, augmented reality devices, virtual reality devices, and other devices that can send and receive data over the network 105. A client device 110 can also include a digital media device, e.g., a streaming device that plugs into a television or other display to stream videos to the television.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

The client device 110 can include applications 112, such as web browsers and/or native applications, to facilitate the sending and receiving of data over the network 105. A native application is an application developed for a particular platform or a particular device (e.g., mobile devices having a particular operating system). Although operations may be described as being performed by the client device 110, such operations may be performed by an application 112 running on the client device 110.

The applications 112 can present electronic resources, e.g., web pages, application pages, or other application content, to a user of the client device 110. The electronic resources can include digital component slots for presenting digital components with the content of the electronic resources. A digital component slot is an area of an electronic resource (e.g., web page or application page) for displaying a digital component. A digital component slot can also refer to a portion of an audio and/or video stream (which is another example of an electronic resource) for playing a digital component.

As used throughout this specification, the "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement the content of a web page or other resource presented by the application 112. More specifically, the digital component may include digital content that is relevant to the resource content (e.g., the digital component may relate to the same topic as the web page content, or to a related topic). The provision of digital components can thus supplement, and generally enhance, the web page or application content.

When the application 112 loads a resource that includes a digital component slot, the application 112 can generate a digital component request that requests a digital component for display in the digital component slot. In some implementations, the digital component slot and/or the resource can include code (e.g., scripts) that cause the application 112 to request a digital component from the digital component distribution system 150.

The client device 110 can present an electronic document. An electronic document is an example of an electronic resource and can include data that presents a set of content at a client device 110. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 110 by electronic document servers 140 ("Electronic Doc Servers").

For example, the electronic document servers 140 can include servers that host publisher websites. In this example, the client device 110 can initiate a request for a given publisher webpage, and the electronic server 140 that hosts the given publisher webpage can respond to the request by sending machine executable instructions that initiate presentation of the given webpage at the client device 110.

In another example, the electronic document servers 140 can include app servers from which client devices 110 can download apps. In this example, the client device 110 can download files required to install an app at the client device 110, and then execute the downloaded app locally (i.e., on the client device). Alternatively, or additionally, the client device 110 can initiate a request to execute the app, which is transmitted to a cloud server. In response to receiving the request, the cloud server can execute the application and stream a user interface of the application to the client device 110 so that the client device 110 does not have to execute the app itself. Rather, the client device 110 can present the user interface generated by the cloud server's execution of the app, and communicate any user interactions with the user interface back to the cloud server for processing.

Electronic documents can include a variety of content. For example, an electronic document can include native content that is within the electronic document itself and/or does not change over time. Electronic documents can also include dynamic content that may change over time or on a per-request basis. For example, a publisher of a given electronic document can maintain a data source that is used to populate portions of the electronic document. In this example, the given electronic document can include a script that causes the client device 110 to request content (e.g., a digital component) from the data source when the given electronic document is processed (e.g., rendered or executed) by a client device 110 (or a cloud server). The client device 110 (or cloud server) integrates the content (e.g., digital component) obtained from the data source into the given electronic document to create a composite electronic document including the content obtained from the data source.

In some situations, a given electronic document can include a digital component script that references the digital component distribution system 150, or a particular service provided by the digital component distribution system 150. In these situations, the digital component script is executed by the client device 110 when the given electronic document is processed by the client device 110. Execution of the digital component script configures the client device 110 to generate a request for digital components (referred to as a "component request"), which is transmitted over the network 105 to the digital component distribution system 150. For example, the digital component script can enable the client device 110 to generate a packetized data request including a header and payload data. The component request is transmitted, by the client device 110, over the network 105 to a server of the digital component distribution system 150.

The digital component distribution system 150 selects digital components (e.g., third-party content, such as video files, audio files, images, text, gaming content, augmented reality content, and combinations thereof, which can all take the form of advertising content or non-advertising content) that will be presented with the given electronic document (e.g., at a location specified by the script) in response to receiving the component request and/or using information included in the component request.

In some implementations, the digital component distribution system 150 can select digital components from candidate digital components that are available from digital component servers 130 of digital component providers that engage with the digital component distribution system 150 to distribute the digital components. For example, an application developer can generate digital components that include content related to the application and provide, to the digital component distribution system 150, data that conditions the distribution of the digital components to client devices 110. For example, the data can include distribution parameters, e.g., keywords, that must be matched by a component request for the digital component distribution system 150 to select the digital components for distribution to a client device in response to the component request.

In some implementations, a digital component is selected in less than a second to avoid errors that could be caused by delayed selection of the digital component. For example, delays in providing digital components in response to a component request can result in page load errors at the client device 110 or cause portions of the electronic document to remain unpopulated even after other portions of the electronic document are presented at the client device 110.

Also, as the delay in providing the digital component to the client device 110 increases, it is more likely that the electronic document will no longer be presented at the client device 110 when the digital component is delivered to the client device 110, thereby negatively impacting a user's experience with the electronic document. Further, delays in providing the digital component can result in a failed delivery of the digital component, for example, if the electronic document is no longer presented at the client device 110 when the digital component is provided.

The client devices 110 can also include a privacy measurement tool 114 that is configured to interact with the network measurement system 120 to facilitate the determination of network measurement data in privacy preserving ways. The measurement tool can be implemented using a software development kit (SDK), scripts, modules, or another appropriate software tool or software code. The measurement tool 114 can be part of an application 112, or part of multiple applications 112, running on the client device 110. For example, each application 112 can include a measurement tool 114.

The network measurement system 120, which can be implemented as one or more computers in one or more locations, can generate network measurement data in a privacy preserving manner. For example, the network measurement system 120 can generate measurements related to digital components provided by the digital component distribution system 150. These measurements can include, for example, a count of the number of occurrences of a particular event after a digital component is presented and/or interacted with at a client device 110, or a rate at which the event occurs. Such events can be referred to as conversion events.

A particular type of conversion event is an application download event. For example, the digital component distribution system 150 can distribute digital components related to a mobile application 112 that can be downloaded and installed on client devices 110. If the user of a client device 110 interacts with, e.g., selects, the digital component, the client device 110 can initiate the download of the application 112 to the client device 110.

When a user interacts with a digital component, the application 112 that presents the digital component can report the interaction to its own server, e.g., to an electronic doc server 140 of the publisher of the application 112. In another example, the application 112 can report the interaction to the digital component distribution system 150 and/or to the network measurement system 120. For example, a digital component can include code, e.g., a script, that causes the application 112 to report the interaction to the digital component distribution system 150 that provided the digital component or to the network measurement system 120. The presentation of the digital component can be reported in the same manner, e.g., by the electronic doc server 140 or the digital component distribution system 150 that provides the digital component for presentation with a resource of the electronic doc server 140.

In either example, to report the interaction (or presentation), the measurement tool 114 of the application 112 can generate a masked identifier using an identifier for the user, an identifier for the client device 110, or another appropriate identifier. An identifier for a user can include, for example, an e-mail address of the user, a phone number of the user, a user name of the user, or another appropriate identifier that uniquely identifies the user. To mask the identifier, the measurement tool 114 can generate a hash value by applying a cryptographic hash function to the identifier. In this example, the masked identifier is the hash value, which can be a hash value of the complete identifier. Such identifiers can be referred to as complete masked identifiers.

Rather than send the actual user or device identifier with the report, the measurement tool 114 can send the complete masked identifier and data related to the network event, e.g., data related to the interaction with the digital component. This data can include, for example, the time at which the interaction occurred, the application 112 in which the interaction occurred, an identifier for the digital component, a type of the client device 110, other contextual data that describes an environment in which the event occurred, and/or other appropriate event data. If the report is sent somewhere other than the network measurement system 120, the other recipient can send the report to the network measurement system 120.

The measurement system 120 can maintain network data 122 for digital components. The network data 122 can include, for each complete masked identifier, data related to each digital component presented to the user and/or interacted with by the user or at the device corresponding to the complete masked identifier (e.g., identified by the identifier that has been masked to generate the complete masked identifier). The data related to each digital component can include the data sent in the report for the interaction or presentation.

In some implementations, the network measurement system 120 stores the network data 122 in the form of network data elements and/or aggregates the data for each complete masked identifier into the form of one or more network data elements. The network measurement system 120 can store or generate a network data element for each complete masked identifier. The network data element for a complete masked identifier can include the complete masked identifier and the network data for each digital component presented to the user and/or interacted with by the user or at the device corresponding to the complete masked identifier. In one example, the network measurement system 120 can store the network data for each presentation or interaction in a separate network data element.

In another example, the network measurement system 120 can store the network data for each presentation or interaction for a given complete masked identifier and for a given digital component or given digital component group in a separate network data element. For example, the network data for each user interaction by a user with a given digital component can be stored in a separate network data element. A digital component group can include multiple digital components that include content for a same subject, e.g., a same product such as a same native application or a same service. A network event data element for a given user and a given digital component group can include the network data for each interaction by the user with a digital component in the digital component group. In each example, the network data elements can include data identifying the digital component or digital component group corresponding to the interaction, e.g., an identifier for the digital component or digital component group and identifier of the product or service (e.g., application) that is the subject of the digital component or digital component group. For example, if the digital component includes content for an application (e.g., an application that can be downloaded by interacting with the digital component), the network data element for a presentation or interaction with the digital component can include an identifier for the application that uniquely identifies the application.

In another example, the network measurement system 120 can store the network data 122 in the form of a table. In this example, the table can include a row (or column) for each user interaction event. In the row (or column) for a user interaction event, the table can include the data related to the digital component and the complete masked identifier, e.g., in respective columns (or rows). The network measurement system 120 can use the information stored in the table to generate the network measurement data elements.

The network data 122 of a network data element can be encrypted using a private set membership protocol in either storage implementation. The network data 122 can also be encrypted using another encryption key, e.g., a public key of the network measurement system 120.

In some implementations, each entity for which digital components are distributed to client devices 110 can have a dedicated network measurement system 120 that stores network data 122 related to its digital components. For example, an application developer can maintain and/or operate a network measurement system 120 that receives network data for its digital components and generates network measurement data related to downloads of its application 112.

In another example, the digital component distribution system 150 can maintain and/or operate the network measurement system 120 for multiple digital component publishers, e.g., multiple application developers. In this example, the network measurement system 120 can store network data for each of the multiple digital component providers. Each piece of network data (e.g., the network data for each user interaction) can be stored with a reference to a complete masked identifier and an application identifier that identifies the application 112 or other entity that is the subject of the digital component. In this way, the network measurement system 120 can identify the network data for each application using the application identifiers. In another example, the network data for each user interaction can be stored with a reference to a complete masked identifier and a digital component identifier or digital component distribution plan identifier for the same purposes.

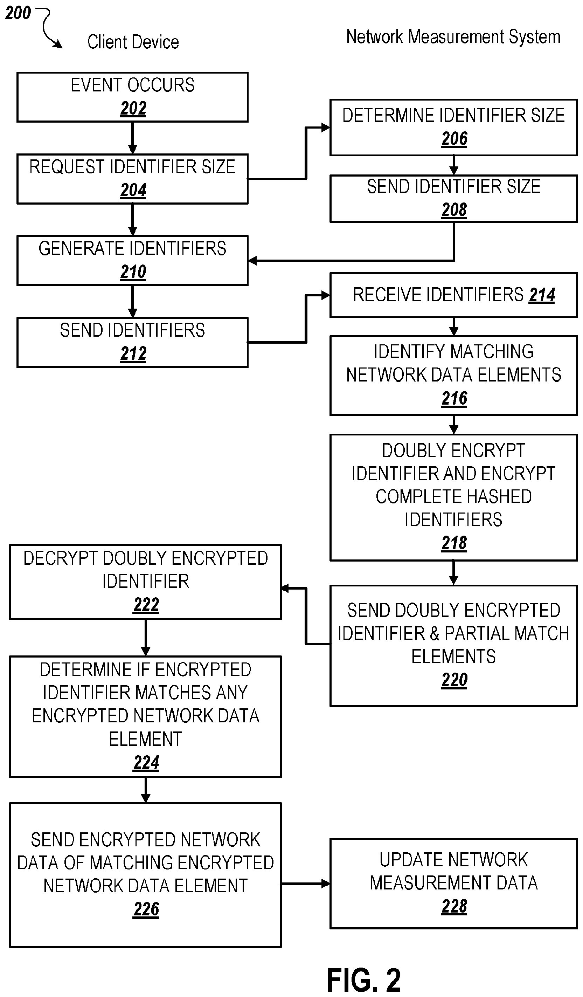

When an event, e.g., a conversion event, is detected, the measurement tool 114 can start a process for determining whether to attribute the event to a particular interaction with a digital component. For example, if an application 112 is downloaded, the measurement tool 114 of that application 112 can initiate the process to determine whether the user of the client device 110 at which the application 112 was downloaded previously interacted with a digital component to download the application 112 and, if so, which digital component received the interaction. If one is identified, the network measurement system 120 can update the network measurements for the digital component based on the download event. For example, the network measurement system 120 can update a conversion rate for the digital component based on the fact that the application was installed following interaction with the digital component. A conversion rate can be a measure of the ratio between the number user interactions with a digital component that result in a conversion and the total number of user interactions with the digital component. An example process for updating network measurement data is described in detail with reference to FIG. 2.

Although this process is described in terms of updating network measurement data for digital components for applications, the process can be used for other types of network events (e.g., product purchases, registering for a website or newsletter, signing up to attend an event, etc.). Additionally, the process can be used for other privacy preserving data collection outside of network measurements.

FIG. 2 is a flow diagram of an example process 200 for collecting network measurement data in a privacy preserving manner. Operations of the process 200 can be performed, for example, by the client device 110 and network measurement system 120 of FIG. 1. Operations indicated as being performed by the client device can be performed by an application running on the client device or a measurement tool of an application running on the client device. The operations of the process 200 can also be implemented as instructions stored on a computer readable medium, which can be non-transitory. Execution of the instructions, by one or more data processing apparatus, causes the one or more data processing apparatus to perform operations of the process 200.

An event occurs at a client device (202). For example, the client device can detect an event, e.g., a conversion event, for which network measurement data should be recorded and/or updated. In another example, the event can be the download and installation of an application at the client device. In another example, the event can be receipt of an instruction to initiate an update to network measurement data, e.g., from the network measurement system. In another example, the event can be the expiration of a time period. For example, the client device can be configured to request the identifier size periodically based on a specified time period.

In response to the event, the client device can request an identifier size for a partial masked identifier (204). The identifier size can be a number "N" of characters or bits of the partial masked identifier, wherein N is a positive integer. For example, as described above, the measurement tool of a client device can be configured to generate a complete partial identifier for user or the user's client device in reporting presentations and/or interactions with digital components. The partial masked identifier can be a portion of the complete masked identifier.

In a particular example, the measurement tool can generate the complete masked identifier by computing a hash value of the complete user or device identifier and a cryptographic hash function. In some implementations, the hash function is a SHA-256 hash function or a SHA-512 hash function. In these examples, the complete masked identifier would be 256 bits if a SHA-256 hash function is used or 512 bits if a SHA-512 hash function is used. The measurement tool can generate the partial masked identifier by removing a portion of the bits of the complete masked identifier based on the identifier size.

For application download events or other events related to an application, the request can include an identifier for the application. For example, the request can include the name of the application. For conversion events for other items, the request can include an identifier for the item. The request may not include any cleartext identifier for the user or device sending the request.

The network measurement system determines the identifier size (206). The network measurement system can determine the identifier size based on a number of users. For example, if the event is related to the download of an application, the number of users can be a number of users that have downloaded the application or the number of users that are active users of the application. The number of active users can be the number of users that have used the application recently, e.g., within a threshold amount of time such as within the past week, month, or year prior to the identifier size being determined.

In some implementations, the network measurement system predicts the number of users of an application based on the number of times the network measurement system receives data indicating that the application was downloaded or a digital component for the application received a user interaction. For example, the network measurement system can predict the number of users of an application based on the number of times an identifier size is requested for the application. In some implementations, the network measurement system can receive the number of users of an application from the developer of the application or another source.

The network measurement system can determine the identifier size based on a target bucket size. The target bucket size indicates a number of partial match elements that should be returned to a client device based on a partial masked identifier received from the client device. In other words, the target bucket size corresponds to a target number of users for which network data is stored that should have a complete masked identifier for which a partial masked identifier matches a portion of the complete masked identifier.

The network measurement system can determine the identifier size based on a combination of the number of users of the application and the target bucket size. For example, the network measurement system determines the identifier size using Equation 1 below:

$$\text{Equation 1:} \quad Identifier\ Size = Log_2\left(\frac{number\ of\ unique\ users}{target\ bucket\ size}\right)$$

In Equation 1, "Identifier size" is the size of the partial masked identifier, "number of unique users" is the number of unique users of the application, an estimated number of unique users of the application, or a number of active users of the application, and "target bucket size" is the target bucket size for the application and optionally other applications. Thus, the identifier size can be based on a ratio between the number of unique users and the target bucket size. In other words, the identifier size can be directly proportional to the number of unique users and inversely proportional to the target bucket size.

In some implementations, the identifier size can be based on other factors in addition to the number of unique users or in place of the number of unique users. For example, the identifier size can be based on a number of user interactions with digital components for the application, the number of presentations of the digital components to users, and/or the number of events that trigger the client device to initiate this process to update a network data measurement for the application, e.g., the number of conversion events (e.g., application install events) for the application.

By determining the identifier size for each event, the network measurement system can adjust the identifier size for an application dynamically based on current conditions. For example, if an application becomes popular and many users have downloaded it recently, this dynamic determination enables the network measurement system to increase the identifier size to keep the number of matching network data elements at or near the target bucket size. This allows the network measurement system to react to increases in popularity of applications in real time to prevent situations in which client devices are overburdened by the number of partial match elements to process to update the measurement data until a user updates the identifier size. For example, if the application becomes extremely popular overnight, the network measurement system can react to the increased number of users automatically and immediately to increase the partial identifier size based on the requests for identifier sizes received from client devices downloading and installing the application.

In some implementations, the network measurement system can apply an upper and/or lower bound to the identifier size to keep the identifier size within a defined range to ensure user privacy. For example, this can prevent situations in which the identifier size is the same size as the complete masked identifier resulting in only complete matches, which may enable the actual user to be identified.

The network measurement system sends data indicating the identifier size to the client device (208). The client device receives data indicating the identifier size.

The client device generates identifiers to send to the network measurement system (210). The client device can generate a partial masked identifier using the complete masked identifier for the user or client device and the identifier size. For example, the client device can generate the partial masked identifier by removing characters or bits from the end of the complete masked identifier until the partial masked identifier has a size that matches the identifier size received from the network measurement system. In a particular example, if the complete masked identifier is 256 bits and the identifier size is 20 bits, the client device can remove the last 236 bits from the complete masked identifier to generate the 20-bit partial masked identifier. As described above, the measurement tool can generate the complete masked identifier by computing a hash value of the complete user or device identifier and a cryptographic hash function. The complete masked identifier can be the hash value output by the hash function based on the complete user or device identifier.

The client device can also generate an encrypted identifier, which can be referred to as a first encrypted identifier. The client device can generate the first encrypted identifier by encrypting the complete masked identifier using an encryption key of the client device. As the first encrypted identifier will be encrypted again by the network measurement system, the client device can generate the first encrypted identifier using a commutative encryption scheme and corresponding encryption key.

The client device sends the partial masked identifier and the first encrypted identifier to the network measurement system (212). The network measurement system receives the identifiers (214). This communication can also include a request for partial match elements that match the partial masked identifier, along with an identifier for the application. The identifier for the application enables the network measurement system to identify network data corresponding to digital components for the application.

The network measurement system identifies matching network data elements using the partial masked identifier (216). As described above, each network data element can include a complete masked identifier and network data for the complete masked identifier. The network data can include data related to network events, e.g., user interactions with digital components, but no user identifiable information. For example, the network data for each complete masked identifier can be aggregate network data for multiple user interactions with digital components by the user corresponding to the complete masked identifier.

The network measurement system can compare the partial masked identifier to the complete masked identifier of each network data element. If the partial masked identifier matches a contiguous portion of a complete masked identifier, the network data element can be considered a matching network data element. Continuing the previous 20-bit partial masked identifier example, a matching complete masked identifier would be one for which the first 20 bits of the complete masked identifier match the partial masked identifier. As the partial masked identifier is smaller than the complete masked identifiers, multiple users or devices may be potential matches to the partial masked identifier. Thus, multiple network data elements can match the partial masked identifier.

The network data for each complete masked identifier can be encrypted using a private set membership protocol such that the client device corresponding to the complete masked identifier is the only device that can decrypt the network data if that is the only encryption applied to the network data. For example, the network data can be encrypted using a private set membership key that is jointly computed by the measurement tool and the network measurement system. The network data can also be encrypted using another encryption key, e.g., a public key of the network measurement system. This can prevent the client devices from accessing network data in cleartext. The network data can be stored in the encrypted form after being encrypted by the encryption key of the network measurement system. The private set membership encryption can be performed by the measurement tool and the network measurement system during the process 200, as described in more detail below.

In implementations in which the network measurement system stores network data for multiple applications or digital component publishers, the client device can send an application identifier for the downloaded application with the identifiers in operation (212). In this example, the network measurement system can identify network data elements that match both the partial masked identifier and the application identifier. In this way, the network measurement system only sends network data elements for that application. In this example, the identified matching network elements are those that could have an identifier that matches the identifier of the user or client device for which the identifiers are sent to the network measurement system and that have network data for a network event related to the application (e.g., a user interaction with a digital component for the application).

The network measurement system doubly encrypts the first encrypted identifier and encrypts the complete masked identifier of each identified matching network element (218). The network measurement system can use the same encryption key or different encryption keys to encrypt the first encrypted identifier and to encrypt the complete masked identifier of each identified matching network element. The network measurement system can generate the doubly encrypted identifier by encrypting the first encrypted identifier using a commutative encryption scheme and corresponding encryption key.

The encrypted complete masked identifier for each identified matching network element can be referred to as a second encrypted identifier. In some implementations, the network measurement system can also generate a hash value of the encrypted complete masked identifier of each identified matching network element by applying a cryptographic hash function to the encrypted completed masked identifier.

For each identified matching network element, the network measurement system can generate a partial match element. The partial match element for an identified matching network element can include the second encrypted identifier for the identified matching network element and the network data of the identified matching network element. Each partial match element can be in the form of a key value pair where the key is the encrypted second identifier (or the hash value computed based on the second encrypted identifier) and the value is the network data.

In some implementations, each partial match element includes encrypted network data and a second encrypted identifier. As described above, the second encrypted identifier is the result of encrypting the complete masked identifier of the network data element using the encryption key of the network measurement system. Similarly, the encrypted network data can be the result of encrypting the network data of the network data element using the encryption key of the network measurement system. The network data can also be encrypted using the private set membership protocol such that the resulting network data can be encrypted using both the private set membership protocol and the encryption key of the network measurement system.

For example, the measurement tool and network measurement system can use oblivious hashing to jointly compute a hash where one party holds the key and the other party holds the hash input. The measurement system can encrypt the network data using the computed hash as an encryption key.

In another example, the network measurement system can generate a key for each identified matching network element by applying a function to the second encrypted identifier for the identified matching network element. The network measurement system can encrypt the network data (which may already be encrypted using another encryption key) of the identified matching network element using the generated key.

The network measurement system sends the doubly encrypted identifier and the partial match elements to the client device (220). In some implementations, the network measurement system can send the encrypted network data to the client device in the form of key value pairs where the second encrypted identifiers of the encrypted network data are the keys and the encrypted network data of the encrypted network data of the encrypted network data are the values.

The client device decrypts the doubly encrypted identifier using a decryption key of the client device (222). For example, the client device can decrypt the doubly encrypted identifier using a decryption key that corresponds to the encryption key used to generate the first encrypted identifier. The result of this decryption is a third encrypted identifier which represents the complete masked identifier of the user or client device encrypted using only the encryption key of the network measurement system.

The client device determines whether the third encrypted identifier matches any of the partial match elements received from the network measurement system (224). The client device can compare the third encrypted identifier to the second encrypted identifier of each second encrypted identifier to determine if the partial match element matches the third encrypted identifier. In some implementations, the client device can use the private set membership protocol to identify a matching partial match element.

If the second encrypted identifiers are hash values generated by applying a hash function to the second encrypted identifiers, the client device can compute a hash value of the third encrypted identifier using the same hash function and compare this hash value to the hash values of the second encrypted identifiers to determine if there is a match.

In some implementations, the client device can also decrypt the network data of the matching partial match element. As the network data can also be encrypted using the encryption key of the network measurement system, the client device cannot access the network data in cleartext in these cases. The client device can decrypt the network data using the jointly computed hash value or by applying a function to the second encrypted identifier to generate the decryption key, depending on how the network measurement system encrypted the network data.

If there is a match, the client device can send the network data, which can be encrypted using the encryption key of the network measurement system but not the private set membership protocol, to the network measurement system (226). As described above, this network data is data that does not include user identifiable information. For example, the network data can include information about a presentation or interaction with a digital component, but not the identifier of the user or device corresponding to the interaction.

The network measurement system can then update network measurement data based on the network data (228). The network measurement system can decrypt the network data using its decryption key and use the decrypted network data to update the network measurements. For example, the network data can indicate that a digital component for a downloaded application was interacted with on a particular date. The network measurement system can update the conversion count for the digital component, the conversion rate for the digital component, and/or other measurements for the digital component based on this information.

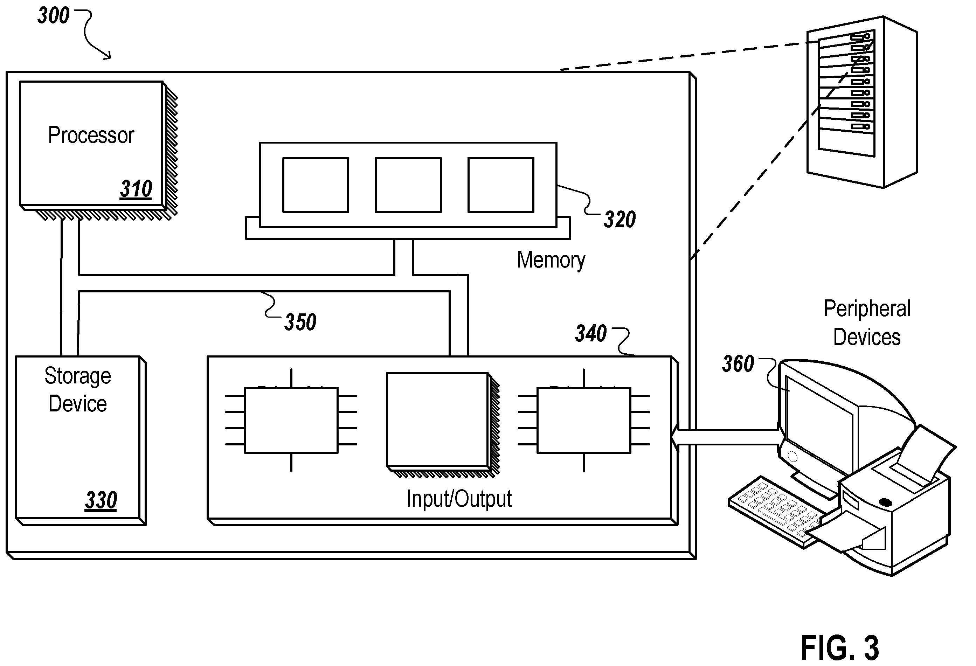

FIG. 3 is a block diagram of an example computer system 300 that can be used to perform operations described above. The system 300 includes a processor 310, a memory 320, a storage device 330, and an input/output device 340. Each of the components 310, 320, 330, and 340 can be interconnected, for example, using a system bus 350. The processor 310 is capable of processing instructions for execution within the system 300. In one implementation, the processor 310 is a single-threaded processor. In another implementation, the processor 310 is a multi-threaded processor. The processor 310 is capable of processing instructions stored in the memory 320 or on the storage device 330.

The memory 320 stores information within the system 300. In one implementation, the memory 320 is a computer-readable medium. In one implementation, the memory 320 is a volatile memory unit. In another implementation, the memory 320 is a non-volatile memory unit.

The storage device 330 is capable of providing mass storage for the system 300. In one implementation, the storage device 330 is a computer-readable medium. In various different implementations, the storage device 330 can include, for example, a hard disk device, an optical disk device, a storage device that is shared over a network by multiple computing devices (e.g., a cloud storage device), or some other large capacity storage device.

The input/output device 340 provides input/output operations for the system 300. In one implementation, the input/output device 340 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 360. Other implementations, however, can also be used, such as mobile computing devices, mobile communication devices, set-top box television client devices, etc.

Although an example processing system has been described in FIG. 3, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A computer-implemented method (200), comprising:

   sending (208), by a network measurement system (120) and to a client device (110), data indicating a size for a partial identifier for an application (112) of the client device;
   receiving (214), by the network measurement system and from the client device, (i) a partial masked identifier generated by masking a complete identifier for the client device or a user of the client device and removing a portion of a resulting complete masked identifier based on the size and (ii) a first encrypted identifier generated by encrypting the complete masked identifier using an encryption key of the client device;
   identifying (216), by the network measurement system and from a set of network data elements (122) that each include network data and a corresponding complete masked identifier, a subset of the network data elements for which the partial masked identifier matches a portion of the complete masked identifier of the network data element;
   sending (220), to the client device, a doubly encrypted identifier generated by encrypting the first encrypted identifier using a first encryption key of the network measurement system and, for each network data element in the subset of network data elements, a partial match element comprising (i) a second encrypted identifier generated by encrypting the complete masked identifier of the network data element using a second encryption key of the network measurement system and (ii) encrypted network data generated by encrypting the network data of the network data element; and
   receiving, by the network measurement system and from the client device, (i) the encrypted network data of a given partial match element for which a decrypted version of the doubly encrypted identifier matches the second encrypted identifier of the given partial match element or (ii) the network data of the given partial match element generated by the client device by decrypting the encrypted network data of the given partial match element.

2. The computer-implemented method of claim 1, wherein the first encryption key of the network measurement system is the same as the second encryption key of the network measurement system, or wherein the first encryption key of the network measurement system is different from the second encryption key of the network measurement system.

3. The computer-implemented method of any preceding claim, further comprising determining the size for the partial identifier for the application based on a number of users of the application, optionally further comprising estimating the number of users based on a number of events reported to the network measurement system for the application.

4. The computer-implemented method of any preceding claim, wherein the network data for each network data element comprises data indicating one or more digital components interacted with by a user or client device identified by the corresponding complete masked identifier of the network data element.

5. The computer-implemented method of any preceding claim, wherein the client device sends the partial masked identifier and the first encrypted identifier in response to detecting a conversion event, optionally wherein the conversion event comprises the download of the application to the client device.

6. The computer-implemented method of any preceding claim, further comprising updating a network data measurement for the application based on the given partial match element.

7. The computer-implemented method of any preceding claim, wherein the second encrypted identifier comprises a hash value generated by applying a cryptographic hash function to the encrypted complete masked identifier of the network data element, and/or wherein the encrypted network data of each network data element comprises doubly encrypted network data encrypted using a third encryption key of the network measurement system and another encryption key.

8. A computer-implemented method (200), comprising:

   receiving, by a client device, data indicating a size for a partial identifier for an application of the client device;
   generating (210), by the client device, (i) a partial masked identifier by masking a complete identifier for the client device or a user of the client device and removing a portion of a resulting complete masked identifier based on the size and (ii) a first encrypted identifier by encrypting the complete masked identifier using an encryption key of the client device;
   sending (212), by the client device, the partial masked identifier and the first encrypted identifier to a network measurement system;
   receiving, by the client device and from the network measurement system, (i) a doubly encrypted identifier generated by encrypting the first encrypted identifier using a first encryption key of the network measurement system and, for each of a plurality of network data elements stored by the network measurement system, the plurality of network data elements being a subset of network data elements for which the partial masked identifier matches a portion of a complete masked identifier of the corresponding network data element, a partial match element comprising (i) a second encrypted identifier generated by encrypting a complete masked identifier of the network data element using a second encryption key of the network measurement system and (ii) encrypted network data generated by encrypting the network data of the network data element;
   decrypting (222) the doubly encrypted identifier using a decryption key of the client device to obtain a third encrypted identifier;
   identifying (224) a given partial match element for which the second encrypted identifier matches the third encrypted identifier; and
   sending (226) the encrypted network data of the given partial match element to the network measurement system.

9. The computer-implemented method of claim 8, wherein the first encryption key of the network measurement system is the same as the second encryption key of the network measurement system, or wherein the first encryption key of the network measurement system is different from the second encryption key of the network measurement system.

10. The computer-implemented method of any one of claims 8 to 9, wherein the size of the partial identifier for the application is based on a number of users of the application, optionally wherein the number of users is estimated based on a number of events reported to the network measurement system for the application.

11. The computer-implemented method of any one of claims 8 to 10, wherein the network data for each network data element comprises data indicating one or more digital components interacted with by a user or client device identified by the corresponding complete masked identifier of the network data element.

12. The computer-implemented method of any one of claims 8 to 11, wherein the client device sends the partial masked identifier and the first encrypted identifier in response to detecting a conversion event, optionally wherein the conversion event comprises the download of the application to the client device.

13. The computer-implemented method of any one of claims 8 to 12, wherein the second encrypted identifier comprises a hash value generated by applying a cryptographic hash function to the encrypted complete masked identifier of the network data element, and/or wherein the encrypted network data of each network data element comprises doubly encrypted network data encrypted using a third encryption key of the network measurement system and another encryption key.

14. A system (300) comprising:

one or more computers; and
one or more storage devices (330) storing instructions that when executed by the one or more computers, cause the one or more computers to perform the operations of the respective method of any one of claims 1-13.

15. One or more computer-readable storage media storing instructions that, when executed by one or more computers, cause the one or more computers to perform the operations of the respective method of any one of claims 1-13.

**Patentansprüche**

1. Computerimplementiertes Verfahren (200), umfassend:

Senden (208), durch ein Netzwerkmesssystem (120) und an eine Client-Vorrichtung (110), von Daten, die eine Größe für eine Teilkennung für eine Anwendung (112) der Client-Vorrichtung angeben;
Empfangen (214), durch das Netzwerkmesssystem und von der Client-Vorrichtung, (i) einer teilmaskierten Kennung, die durch Maskieren einer vollständigen Kennung für die Client-Vorrichtung oder einen Benutzer der Client-Vorrichtung und Entfernen eines Teils einer resultierenden vollständigen maskierten Kennung basierend auf der Größe erzeugt wird, und (ii) einer ersten verschlüsselten Kennung, die durch Verschlüsseln der vollständigen maskierten Kennung unter Verwendung eines Verschlüsselungsschlüssels der Client-Vorrichtung erzeugt wird; Identifizieren (216), durch das Netzwerkmesssystem und aus einem Satz von Netzwerkdatenelementen (122), die jeweils Netzwerkdaten und eine entsprechende vollständige maskierte Kennung beinhalten, einer Teilmenge der Netzwerkdatenelemente, für die die teilmaskierte Kennung mit einem Teil der vollständigen maskierten Kennung des Netzwerkdatenelements übereinstimmt;
Senden (220), an die Client-Vorrichtung, einer doppelt verschlüsselten Kennung, die durch Verschlüsseln der ersten verschlüsselten Kennung unter Verwendung eines ersten Verschlüsselungsschlüssels des Netzwerkmesssystems erzeugt wird, und, für jedes Netzwerkdatenelement in der Teilmenge von Netzwerkdatenelementen, eines Teilübereinstimmungselements, das (i) eine zweite verschlüsselte Kennung, die durch Verschlüsseln der vollständigen maskierten Kennung des Netzwerkdatenelements unter Verwendung eines zweiten Verschlüsselungsschlüssels des Netzwerkmesssystems erzeugt wird, und (ii) verschlüsselte Netzwerkdaten, die durch Verschlüsseln der Netzwerkdaten des Netzwerkdatenelements erzeugt werden, umfasst; und
Empfangen, durch das Netzwerkmesssystem und von der Client-Vorrichtung, (i) der verschlüsselten Netzwerkdaten eines gegebenen Teilübereinstimmungselements, für das eine entschlüsselte Version der doppelt verschlüsselten Kennung mit der zweiten verschlüsselten Kennung des gegebenen Teilübereinstimmungselements übereinstimmt, oder (ii) der Netzwerkdaten des gegebenen Teilübereinstimmungselements, die durch die Client-Vorrichtung durch Entschlüsseln der verschlüsselten Netzwerkdaten des gegebenen Teilübereinstimmungselements erzeugt werden.

2. Computerimplementiertes Verfahren nach Anspruch 1, wobei der erste Verschlüsselungsschlüssel des Netzwerkmesssystems derselbe wie der zweite Verschlüsselungsschlüssel des Netzwerkmesssystems ist, oder wobei der erste Verschlüsselungsschlüssel des Netzwerkmesssystems von dem zweiten Verschlüsselungsschlüssel des Netzwerkmesssystems verschieden ist.

3. Computerimplementiertes Verfahren nach einem der vorhergehenden Ansprüche, ferner umfassend ein Bestimmen der Größe für die Teilkennung für die Anwendung basierend auf einer Anzahl von Benutzern der Anwendung, optional ferner umfassend ein Schätzen der Anzahl von Benutzern basierend auf einer Anzahl von Ereignissen, die an das Netzwerkmesssystem für die Anwendung gemeldet werden.

4. Computerimplementiertes Verfahren nach einem der vorhergehenden Ansprüche, wobei die Netzwerkdaten für jedes Netzwerkdatenelement Daten umfassen, die eine oder mehrere digitale Komponenten angeben, mit denen ein Benutzer oder eine Client-Vorrichtung interagiert hat, der/die durch die entsprechende vollständige maskierte Kennung des Netzwerkdatenelements identifiziert wird.

**5.** Computerimplementiertes Verfahren nach einem der vorhergehenden Ansprüche, wobei die Client-Vorrichtung die teilmaskierte Kennung und die erste verschlüsselte Kennung als Reaktion auf ein Erkennen eines Konversionsereignisses sendet, optional wobei das Konversionsereignis den Download der Anwendung auf die Client-Vorrichtung umfasst.

**6.** Computerimplementiertes Verfahren nach einem der vorhergehenden Ansprüche, ferner umfassend ein Aktualisieren einer Netzwerkdatenmessung für die Anwendung basierend auf dem gegebenen Teilübereinstimmungselement.

**7.** Computerimplementiertes Verfahren nach einem der vorhergehenden Ansprüche, wobei die zweite verschlüsselte Kennung einen Hash-Wert umfasst, der durch Anwenden einer kryptografischen Hash-Funktion auf die verschlüsselte vollständige maskierte Kennung des Netzwerkdatenelements erzeugt wird, und/oder wobei die verschlüsselten Netzwerkdaten jedes Netzwerkdatenelements doppelt verschlüsselte Netzwerkdaten umfassen, die unter Verwendung eines dritten Verschlüsselungsschlüssels des Netzwerkmesssystems und eines anderen Verschlüsselungsschlüssels verschlüsselt sind.

**8.** Computerimplementiertes Verfahren (200), umfassend:

Empfangen, durch eine Client-Vorrichtung, von Daten, die eine Größe für eine Teilkennung für eine Anwendung der Client-Vorrichtung angeben;
Erzeugen (210), durch die Client-Vorrichtung, (i) einer teilmaskierten Kennung durch Maskieren einer vollständigen Kennung für die Client-Vorrichtung oder einen Benutzer der Client-Vorrichtung und Entfernen eines Teils einer resultierenden vollständigen maskierten Kennung basierend auf der Größe und (ii) einer ersten verschlüsselten Kennung durch Verschlüsseln der vollständigen maskierten Kennung unter Verwendung eines Verschlüsselungsschlüssels der Client-Vorrichtung;
Senden (212), durch die Client-Vorrichtung, der teilmaskierten Kennung und der ersten verschlüsselten Kennung an ein Netzwerkmesssystem;
Empfangen, durch die Client-Vorrichtung und von dem Netzwerkmesssystem, (i) einer doppelt verschlüsselten Kennung, die durch Verschlüsseln der ersten verschlüsselten Kennung unter Verwendung eines ersten Verschlüsselungsschlüssels des Netzwerkmesssystems erzeugt wird, und, für jedes einer Vielzahl von Netzwerkdatenelementen, die durch das Netzwerkmesssystem gespeichert werden, wobei die Vielzahl von Netzwerkdatenelementen eine Teilmenge von Netzwerkdatenelementen ist, für die die teilmaskierte Kennung mit einem Teil einer vollständigen maskierten Kennung des entsprechenden Netzwerkdatenelements übereinstimmt, eines Teilübereinstimmungselements, das (i) eine zweite verschlüsselte Kennung, die durch Verschlüsseln einer vollständigen maskierten Kennung des Netzwerkdatenelements unter Verwendung eines zweiten Verschlüsselungsschlüssels des Netzwerkmesssystems erzeugt wird, und (ii) verschlüsselte Netzwerkdaten, die durch Verschlüsseln der Netzwerkdaten des Netzwerkdatenelements erzeugt werden, umfasst;
Entschlüsseln (222) der doppelt verschlüsselten Kennung unter Verwendung eines Entschlüsselungsschlüssels der Client-Vorrichtung, um eine dritte verschlüsselte Kennung zu erhalten; Identifizieren (224) eines gegebenen Teilübereinstimmungselements, für das die zweite verschlüsselte Kennung mit der dritten verschlüsselten Kennung übereinstimmt; und
Senden (226) der verschlüsselten Netzwerkdaten des gegebenen Teilübereinstimmungselements an das Netzwerkmesssystem.

**9.** Computerimplementiertes Verfahren nach Anspruch 8, wobei der erste Verschlüsselungsschlüssel des Netzwerkmesssystems derselbe wie der zweite Verschlüsselungsschlüssel des Netzwerkmesssystems ist, oder wobei der erste Verschlüsselungsschlüssel des Netzwerkmesssystems von dem zweiten Verschlüsselungsschlüssel des Netzwerkmesssystems verschieden ist.

**10.** Computerimplementiertes Verfahren nach einem der Ansprüche 8 bis 9, wobei die Größe der Teilkennung für die Anwendung auf einer Anzahl von Benutzern der Anwendung basiert, optional wobei die Anzahl von Benutzern basierend auf einer Anzahl von Ereignissen geschätzt wird, die an das Netzwerkmesssystem für die Anwendung gemeldet werden.

**11.** Computerimplementiertes Verfahren nach einem der Ansprüche 8 bis 10, wobei die Netzwerkdaten für jedes Netzwerkdatenelement Daten umfassen, die eine oder mehrere digitale Komponenten angeben, mit denen ein Benutzer oder eine Client-Vorrichtung interagiert hat, der/die durch die entsprechende vollständige maskierte Kennung des Netzwerkdatenelements identifiziert wird.

**12.** Computerimplementiertes Verfahren nach einem der Ansprüche 8 bis 11, wobei die Client-Vorrichtung die teilmaskierte Kennung und die erste verschlüsselte Kennung als Reaktion auf ein Erkennen eines Konversionsereignisses sendet, optional wobei das Konversionsereignis den Download der Anwendung auf die Client-Vorrichtung umfasst.

**13.** Computerimplementiertes Verfahren nach einem der Ansprüche 8 bis 12, wobei die zweite verschlüsselte Kennung einen Hash-Wert umfasst, der durch Anwenden einer kryptografischen Hash-Funktion auf die verschlüsselte vollständige maskierte Kennung des Netzwerkdatenelements erzeugt wird, und/oder wobei die verschlüsselten Netzwerkdaten jedes Netzwerkdatenelements doppelt verschlüsselte Netzwerkdaten umfassen, die unter Verwendung eines dritten Verschlüsselungsschlüssels des Netzwerkmesssystems und eines anderen Verschlüsselungsschlüssels verschlüsselt sind.

**14.** System (300), umfassend:

einen oder mehrere Computer; und
eine oder mehrere Speichervorrichtungen (330), die Anweisungen speichern, die, wenn sie durch den einen oder die mehreren Computer ausgeführt werden, den einen oder die mehreren Computer veranlassen, die Operationen des jeweiligen Verfahrens nach einem der Ansprüche 1-13 durchzuführen.

**15.** Ein oder mehrere computerlesbare Speichermedien, die Anweisungen speichern, die, wenn sie durch einen oder mehrere Computer ausgeführt werden, den einen oder die mehreren Computer veranlassen, die Operationen des jeweiligen Verfahrens nach einem der Ansprüche 1-13 durchzuführen.

**Revendications**

**1.** Procédé mis en œuvre par ordinateur (200), comprenant :

l'envoi (208), par un système de mesure de réseau (120) et à un dispositif client (110), de données indiquant une taille d'un identifiant partiel pour une application (112) du dispositif client ;
la réception (214), par le système de mesure de réseau et depuis le dispositif client, (i) d'un identifiant masqué partiel généré en masquant un identifiant complet pour le dispositif client ou un utilisateur du dispositif client et en supprimant une partie d'un identifiant masqué complet résultant sur la base de la taille et (ii) d'un premier identifiant chiffré généré en chiffrant l'identifiant masqué complet à l'aide d'une clé de chiffrement du dispositif client ;
l'identification (216), par le système de mesure de réseau et à partir d'un ensemble d'éléments de données réseau (122) comportant chacun des données réseau et un identifiant masqué complet correspondant, d'un sous-ensemble des éléments de données réseau pour lesquels l'identifiant masqué partiel correspond à une partie de l'identifiant masqué complet de l'élément de données réseau ;
l'envoi (220), au dispositif client, d'un identifiant doublement chiffré généré en chiffrant le premier identifiant chiffré à l'aide d'une première clé de chiffrement du système de mesure de réseau et, pour chaque élément de données réseau du sous-ensemble d'éléments de données réseau, d'un élément de correspondance partielle comprenant (i) un deuxième identifiant chiffré généré en chiffrant l'identifiant masqué complet de l'élément de données réseau à l'aide d'une deuxième clé de chiffrement du système de mesure de réseau et (ii) des données réseau chiffrées générées en chiffrant les données réseau de l'élément de données réseau ; et
la réception, par le système de mesure de réseau et depuis le dispositif client, (i) des données réseau chiffrées d'un élément de correspondance partielle donné pour lequel une version déchiffrée de l'identifiant doublement chiffré correspond au deuxième identifiant chiffré de l'élément de correspondance partielle donné ou (ii) des données réseau de l'élément de correspondance partielle donné générées par le dispositif client en déchiffrant les données réseau chiffrées de l'élément de correspondance partielle donné.

**2.** Procédé mis en œuvre par ordinateur selon la revendication 1, dans lequel la première clé de chiffrement du système de mesure de réseau est la même que la deuxième clé de chiffrement du système de mesure de réseau, ou dans lequel la première clé de chiffrement du système de mesure de réseau est différente de la deuxième clé de chiffrement du système de mesure de réseau.

**3.** Procédé mis en œuvre par ordinateur selon une quelconque revendication précédente, comprenant en outre la détermination de la taille de l'identifiant partiel pour l'application sur la base d'un nombre d'utilisateurs de l'application, comprenant éventuellement en outre l'estimation du nombre d'utilisateurs sur la base d'un nombre d'événements signalés au système de mesure de réseau pour l'application.

4. Procédé mis en œuvre par ordinateur selon une quelconque revendication précédente, dans lequel les données réseau pour chaque élément de données réseau comprennent des données indiquant un ou plusieurs composants numériques avec lesquels un utilisateur ou un dispositif client identifié par l'identifiant masqué complet correspondant de l'élément de données réseau a interagi.

5. Procédé mis en œuvre par ordinateur selon une quelconque revendication précédente, dans lequel le dispositif client envoie l'identifiant masqué partiel et le premier identifiant chiffré en réponse à la détection d'un événement de conversion, éventuellement dans lequel l'événement de conversion comprend le téléchargement de l'application sur le dispositif client.

6. Procédé mis en œuvre par ordinateur selon une quelconque revendication précédente, comprenant en outre la mise à jour d'une mesure de données réseau pour l'application sur la base de l'élément de correspondance partielle donné.

7. Procédé mis en œuvre par ordinateur selon une quelconque revendication précédente, dans lequel le deuxième identifiant chiffré comprend une valeur de hachage générée en appliquant une fonction de hachage cryptographique à l'identifiant masqué complet chiffré de l'élément de données réseau, et/ou dans lequel les données réseau chiffrées de chaque élément de données réseau comprennent des données réseau doublement chiffrées à l'aide d'une troisième clé de chiffrement du système de mesure de réseau et d'une autre clé de chiffrement.

8. Procédé mis en œuvre par ordinateur (200), comprenant la réception, par un dispositif client, de données indiquant une taille d'un identifiant partiel pour une application du dispositif client ;

la génération (210), par le dispositif client, (i) d'un identifiant masqué partiel en masquant un identifiant complet pour le dispositif client ou un utilisateur du dispositif client et en supprimant une partie d'un identifiant masqué complet résultant sur la base de la taille et (ii) d'un premier identifiant chiffré en chiffrant l'identifiant masqué complet à l'aide d'une clé de chiffrement du dispositif client ;

l'envoi (212), par le dispositif client, de l'identifiant masqué partiel et du premier identifiant chiffré à un système de mesure de réseau ;

la réception, par le dispositif client et depuis le système de mesure de réseau, (i) d'un identifiant doublement chiffré généré en chiffrant le premier identifiant chiffré à l'aide d'une première clé de chiffrement du système de mesure de réseau et, pour chacun d'une pluralité d'éléments de données réseau stockés par le système de mesure de réseau, la pluralité d'éléments de données réseau étant un sous-ensemble d'éléments de données réseau pour lesquels l'identifiant masqué partiel correspond à une partie d'un identifiant masqué complet de l'élément de données réseau correspondant, d'un élément de correspondance partielle comprenant (i) un deuxième identifiant chiffré généré en chiffrant un identifiant masqué complet de l'élément de données réseau à l'aide d'une deuxième clé de chiffrement du système de mesure de réseau et (ii) des données réseau chiffrées générées en chiffrant les données réseau de l'élément de données réseau ;

le déchiffrement (222) de l'identifiant doublement chiffré à l'aide d'une clé de déchiffrement du dispositif client pour obtenir un troisième identifiant chiffré ;

l'identification (224) d'un élément de correspondance partielle donné pour lequel le deuxième identifiant chiffré correspond au troisième identifiant chiffré ; et

l'envoi (226) des données réseau chiffrées de l'élément de correspondance partielle donné au système de mesure de réseau.

9. Procédé mis en œuvre par ordinateur selon la revendication 8, dans lequel la première clé de chiffrement du système de mesure de réseau est la même que la deuxième clé de chiffrement du système de mesure de réseau, ou dans lequel la première clé de chiffrement du système de mesure de réseau est différente de la deuxième clé de chiffrement du système de mesure de réseau.

10. Procédé mis en œuvre par ordinateur selon l'une quelconque des revendications 8 et 9, dans lequel la taille de l'identifiant partiel pour l'application est basée sur un nombre d'utilisateurs de l'application, éventuellement dans lequel le nombre d'utilisateurs est estimé sur la base d'un nombre d'événements signalés au système de mesure de réseau pour l'application.

11. Procédé mis en œuvre par ordinateur selon l'une quelconque des revendications 8 à 10, dans lequel les données réseau de chaque élément de données réseau comprennent des données indiquant un ou plusieurs composants numériques avec lesquels un utilisateur ou un dispositif client identifié par l'identifiant masqué complet correspondant de l'élément de données réseau a interagi.

12. Procédé mis en œuvre par ordinateur selon l'une quelconque des revendications 8 à 11, dans lequel le dispositif client envoie l'identifiant masqué partiel et le premier identifiant chiffré en réponse à la détection d'un événement de conversion, dans lequel éventuellement l'événement de conversion comprend le téléchargement de l'application sur le dispositif client.

13. Procédé mis en œuvre par ordinateur selon l'une quelconque des revendications 8 à 12, dans lequel le deuxième identifiant chiffré comprend une valeur de hachage générée en appliquant une fonction de hachage cryptographique à l'identifiant masqué complet chiffré de l'élément de données réseau, et/ou dans lequel les données réseau chiffrées de chaque élément de données réseau comprennent des données réseau doublement chiffrées qui sont chiffrées à l'aide d'une troisième clé de chiffrement du système de mesure de réseau et d'une autre clé de chiffrement.

14. Système (300) comprenant :

un ou plusieurs ordinateurs ; et
un ou plusieurs dispositifs de stockage (330) stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

15. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.

**FIG. 1**

*200*

Client Device

Network Measurement System

EVENT OCCURS
*202*

REQUEST IDENTIFIER SIZE
*204*

DETERMINE IDENTIFIER SIZE
*206*

SEND IDENTIFIER SIZE
*208*

GENERATE IDENTIFIERS
*210*

RECEIVE IDENTIFIERS *214*

SEND IDENTIFIERS
*212*

IDENTIFY MATCHING
NETWORK DATA ELEMENTS
*216*

DOUBLY ENCRYPT
IDENTIFIER AND ENCRYPT
COMPLETE HASHED
IDENTIFIERS
*218*

DECRYPT DOUBLY ENCRYPTED
IDENTIFIER
*222*

SEND DOUBLY ENCRYPTED
IDENTIFIER & PARTIAL MATCH
ELEMENTS
*220*

DETERMINE IF ENCRYPTED
IDENTIFIER MATCHES ANY
ENCRYPTED NETWORK DATA
ELEMENT
*224*

SEND ENCRYPTED NETWORK
DATA OF MATCHING ENCRYPTED
NETWORK DATA ELEMENT
*226*

UPDATE NETWORK
MEASUREMENT DATA
*228*

FIG. 2

FIG. 3

**REFERENCES CITED IN THE DESCRIPTION**

**Patent documents cited in the description**

- US 63545524
- US 2022027497 A1
- US 2022147650 A1
- WO 2022266071 A1